# EUROPEAN PATENT APPLICATION

(11) **EP 1 844 998 A2**
(43) Date of publication of application: **17.10.2007**
(21) Application number: 07105939.8
(22) Date of filing: 11.04.2007
(51) Int. Cl.: B60T 8/171

(54) **True speed sensor**

(30) Priority: 11.04.2006 US 744649 P; 21.08.2006 US 465817
(71) Applicant: Goodrich Corporation, Charlotte, North Carolina 28217-4578 (US)
(72) Inventor: Cahill, Eric D., Troy, OH 45373 (US)
(74) Representative: Hilleringmann, Jochen

(57) **Abstract**

A hub cap assembly (71) couplable to an axle (35) of a vehicle and operable to obtain data indicative of wheel velocity includes a housing (74), a hub cap (33) rotatably coupled to said housing (74), and a speed sensor (72) coupled to said hub cap (33). The assembly may be inserted into or otherwise coupled to an axle of a vehicle.

## Description

### Related Application Data

This application claims priority of U.S. Provisional Application No. 60/744,649 filed on April 11, 2006, which is incorporated herein by reference in its entirety.

### Field of the Invention

The present invention relates generally to speed sensors and, more particularly, to a device and method for measuring a true speed of a wheel.

### Background of the Invention

Modern brake control systems monitor the rotation of one or more wheels and modify the braking force applied to the wheel or brakes as necessary for proper braking. Such brake control systems are in widespread use in commercial and military aircraft, as well as in ground transportation vehicles. In use, these systems provide improved braking control, antiskid and reduced stopping distances.

One of the central elements of a brake control system is the wheel speed sensor or transducer, which provides data regarding the instantaneous wheel speed of the various wheels of the vehicle. An accurate measure of wheel speed is an important first step in detecting and then controlling braking conditions such as wheel skid. Known wheel speed transducers convert the rotational speed of the associated wheel to electrical signals, and these signals then are employed by brake control circuitry, such as antiskid control circuitry and/or automatic brake control circuitry, to control the braking activity of the vehicle,

Conventional systems for monitoring wheel speed have employed analog and/or digital sensors, wherein the wheel speed sensor produces a signal having a frequency that is proportional to the rotational speed of the wheel. The signal is transmitted from the sensor at each wheel to respective sensing and control circuits, which control the braking pressure to prevent skidding of the respective wheels. Wheel speed transducers typically include one part which is fixed to the axle or aircraft frame, while another part is connected to and rotates with the associated wheel

Further, conventional methods of deriving wheel speed utilize the axle as a reference point. That is, the sensor is located in or on the axle and the speed is translated from a hubcap to the sensor via a coupling, such as a blade-clip interface, for example. When a misalignment between the axle and hubcap is present, however, an error or oscillation is observed in the sensor signal, which results in inaccuracies in measured speed. Signal errors in this sense are due in part to an elliptical path of the coupling induced by the misalignment

### Summary of the Invention

The present invention enables measurement of true wheel speed, which is obtained by direct measurement of rotational velocity at the hubcap. The invention comprises a hub cap assembly that includes a hub cap rotatably coupled to a hub cap housing. The entire assembly may be inserted in or otherwise attached to an axle of a vehicle, without the need for precise alignment with the axle. Since the measurement sensors are within the housing, the measured speed is true to the hub cap, which eliminates problems associated with the axle centerline being offset from the hub cap centerline. Further, the coupling, which can be a source of dynamic vibration and a point of wear, can be eliminated, thereby reducing costs. Not only is the measured speed determined with increased accuracy, the components used to manufacture the system need not be high precision components, thereby reducing manufacturing costs.

According to one aspect of the invention, there is provided a hub cap assembly couplable to an axle of a vehicle, said assembly operable to obtain data indicative of wheel velocity. The hub cap assembly includes a housing, a hub cap rotatably coupled to said housing, and a speed sensor coupled to said hub cap and said housing.

According to another aspect of the invention, there is provided a method for measuring wheel speed using a hub cap assembly comprising a housing, a speed sensor and a hub cap, the method including using the sensor to measure a rotational velocity of the hub cap relative to the hub cap assembly.

According to another aspect of the invention, there is provided an aircraft wheel speed monitoring system for detecting a speed of an aircraft wheel. The system includes a hubcap rotatable with the aircraft wheel, and a sensor operatively coupled to the hubcap. The sensor includes at least two channels 90 degrees out of phase with respect to each other.

According to another aspect of the invention, there is provided an aircraft wheel speed monitoring system for detecting a speed of an aircraft wheel. The system includes a hub cap rotatable with the aircraft wheel, and a resolver operatively coupled to said hub cap. The resolver is operable to provide data indicative of an angular position of said wheel.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed.

### Brief Description of the Drawings

The forgoing and other embodiments of the invention are hereinafter discussed with reference to the drawings.

Fig. 1 is a schematic diagram illustrating an exemplary relationship between a velocity reference point and a centerline of a hubcap.

Fig. 2 is a schematic diagram illustrating an exemplary relationship between a velocity reference point and a hubcap centerline in accordance with the invention.

Fig. 3 is a cross-sectional view of an exemplary aircraft brake.

Fig. 4 is an axial view of the actuator modules of the brake of Fig. 3.

Fig. 5 is a schematic diagram of an exemplary aircraft brake control system.

Fig. 6 is a schematic diagram of an exemplary axle and hubcap including a wheel speed sensor in accordance with the invention.

Fig. 7 is a schematic diagram illustrating an exemplary orbit of an effector through a detection range of a detector in accordance with the invention.

Fig. 8 is a graph illustrating signals produced from an exemplary wheel speed sensor in accordance with the invention.

Figs. 9A-9C are perspective views of an exemplary axle and hubcap including a wheel speed sensor in accordance with the invention.

Figs. 10A-10B are cross-sectional views of an exemplary axle and hubcap in accordance with the invention.

### Detailed Description

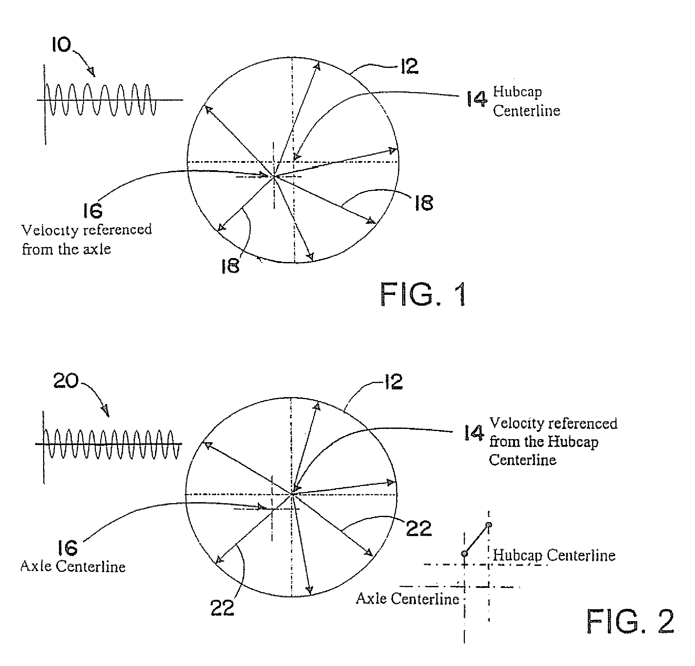

Conventionally, wheel speed is referenced with respect to the axle, wherein a sensor is mounted in or on the axle and the speed of the hubcap is translated from the hubcap to the sensor via a coupling (e.g., a clip is fixed to and rotates with the hubcap, and a blade, which interfaces with the clip, is normally part of the sensor and rotates with the clip causing the sensor to produce a speed signal). For various reasons, e.g., manufacturing tolerances and/or coupling techniques, misalignment occurs between the hubcap centerline and the axle centerline. This misalignment causes the orbit of the clip about the axle centerline to be offset, thereby creating an oscillation or "accordion effect" in the velocity signal, as indicated in the graph 10 of Fig. 1.

For example, Fig. 1 illustrates a circle 12 having a first point 14 (i.e., the center point of the circle) and a second point 16 offset from the first point 14. The circle 12 can represent an orbit of the clip, the first point 14 can represent a centerline of the hubcap, and the second point 16 can represent a centerline of the axle. As the hubcap rotates, the clip rotates with the hubcap such that a center of the clip orbit coincides with the hubcap centerline 14 (i.e., the centerline 14 and center of the clip orbit are the same point). However, since the axle centerline 16 does not coincide with the hubcap centerline 14, the clip orbit 12 is skewed with respect to the axle centerline 16. This causes the sensor to measure multiple velocity components (e.g., angular and orbiting), which creates an oscillation in the velocity signal graph 10. This is illustrated in Fig. 1 by the arrows 18, each of which have different lengths or magnitudes from the axle centerline 16 (the velocity reference point for this example) to the clip orbit 12.

The present invention enables the determination of true wheel speed by eliminating harmonics associated with a hubcap having multiple components of velocity (e.g., angular velocity and orbiting velocity) More specifically, wheel speed is referenced from the hubcap and/or hubcap centerline, and not from the axle or axle centerline. In other words, relative motion is translated out of the hub cap rather than through a coupling back to the axle. Thus, if misalignments are present between the hubcap and the axle, the wheel speed sensor does not record these as oscillations (the sensor effectively is immune to such misalignments). This arrangement assures that the only component of velocity that is sensed is the true angular velocity of the hubcap, without harmonics associated with the orbiting velocity.

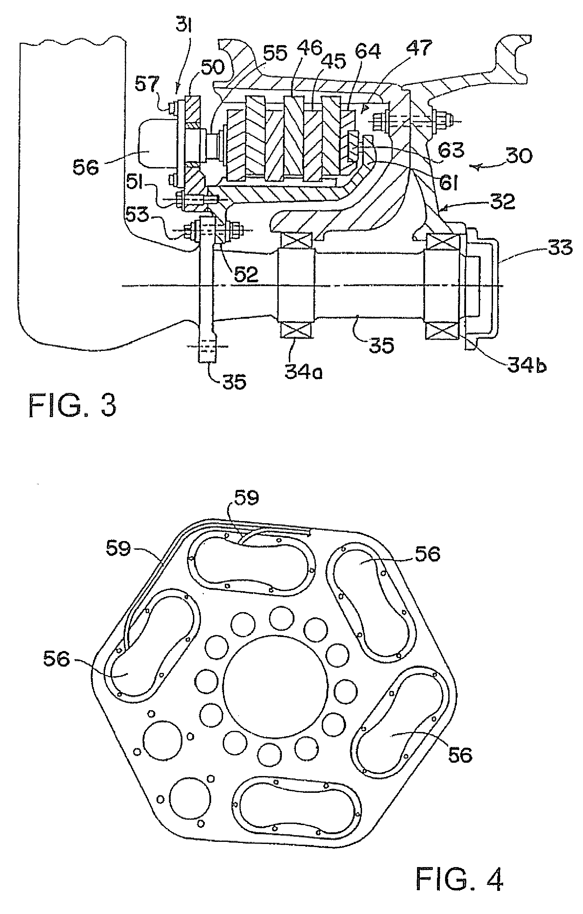

For example, and with reference to Fig. 2, the circle 12, first point 14 (hubcap centerline) and second point 16 (axle centerline) correspond to the above-described points. However, velocity is directly measured at the hubcap (e.g., velocity is referenced from the hubcap centerline 14) as opposed to measuring velocity from the axle (e.g., velocity being referenced from the axle centerline 16). In this scenario, the sensor's pickup (also referred to as a detector) is held in a constant position relative to an orbit of the sensor's effector, resulting in elimination of harmonics (misalignment errors) associated with offsets between the axle centerline 16 and the hubcap centerline 14. The graph 20 of Fig. 2 illustrates a feedback signal free from harmonics, as do the arrows 22, which all have the same length or magnitude from the hubcap centerline 14 (the velocity reference point) to the clip orbit 12.

As used herein, an effector is defined as a device used to produce a desired result or event. Examples of an effector include slits in an optical disk, a magnetic object, electrical windings, etc.

The invention will now be described in more detail with respect to several embodiments. Because the invention was conceived and developed for use in aircraft braking systems, it will be herein described chiefly in this context. However, the principles of the invention in their broader aspects can be adapted to other types of braking systems, such as in train brake systems or earth moving vehicle brake systems, for example.

Referring now to Fig. 3, an exemplary wheel and brake is generally indicated at 30. The assembly 30 generally comprises a brake 31 and an aircraft wheel 32, which is coupled to a hubcap 33. The wheel 32 and/or hubcap 33 are supported for rotation by bearings 34a and 34b on an aircraft axle 35. The aircraft axle 35 forms a wheel mount and is attached to the end of an aircraft landing gear strut (not shown) or a truck attached to the end of a landing gear strut.

The brake 31 includes a brake head or housing 50 which is attached by bolt fasteners 51 to a torque tube 52, which in turn is attached by bolt fasteners 53 to a torque take-out flange on the aircraft axle 35. The torque tube 52 is surrounded by stationary brake elements and rotary brake elements that are interleaved. The stationary and rotary brake elements are in the form of stator disks 45 and rotor disks 46, and the interleaved arrangement thereof is commonly referred to as a brake disk stack, the same being designated by reference numeral 47. The stator disks 45 are splined to the torque tube 52 and the rotor disks 46 are splined to the wheel 32 interiorly of the wheel's rim. As is conventional, the splined connection may be effected by a plurality of spline or drive keys that are spaced around the circumference of the rim/torque tube to permit axial movement of the rotor/stator disks while being held to the wheel/torque tube against relative rotation.

The disk stack 47 is located between a back pressure member 61 and the brake head 50. The back pressure member 61 is formed by a radial flange at the outer end of the torque tube 52. The radial flange 61 carries thereon a plurality of circumferentially spaced torque pucks 63 engaged with the last brake disk 64 at the rear end of the disk stack 47. The torque pucks 63 may be attached in a known manner to the radial flange 61 by several torque pucks which have the stems thereof loosely fitted in holes in the radial flange to permit some swiveling movement thereof. The torque pucks 63 in the illustrated embodiment secure the last brake disk 64 against rotation relative to the torque tube 52. In a modified arrangement, the radial flange could be configured to engage directly the disk pack, and still other arrangements could be used.

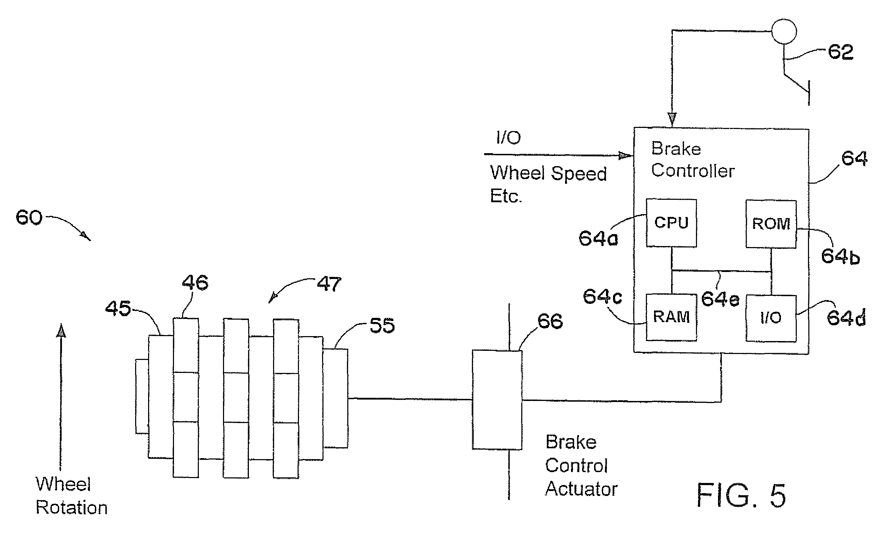

Pressure is applied to the front end of the disk stack 47 by one or more disk engaging members which in the illustrated embodiment are the inboard ends of one or more actuator rams 55. The actuator rams 55 are included in respective electric actuator modules 56 mounted to the brake head 50 by removable bolt fasteners 57 or other suitable means enabling quick and easy attachment and detachment of the actuator modules to and from the brake head. As shown in Fig. 4, a plurality of the electric actuator modules 56 are mounted in a circular arrangement around the rotational axis of the wheel, preferably with the actuator rams circumferentially equally spaced apart. The electric actuator modules 56 each have extending therefrom a cable 59 (only two shown) for effecting electrical connection to a brake controller 44, as described below with respect to Fig. 5. It is noted that while the brake is described with respect to an electric braking system and electric actuator means, the brake may be implemented using other actuator means (e.g., hydraulic, pneumatic, etc.).

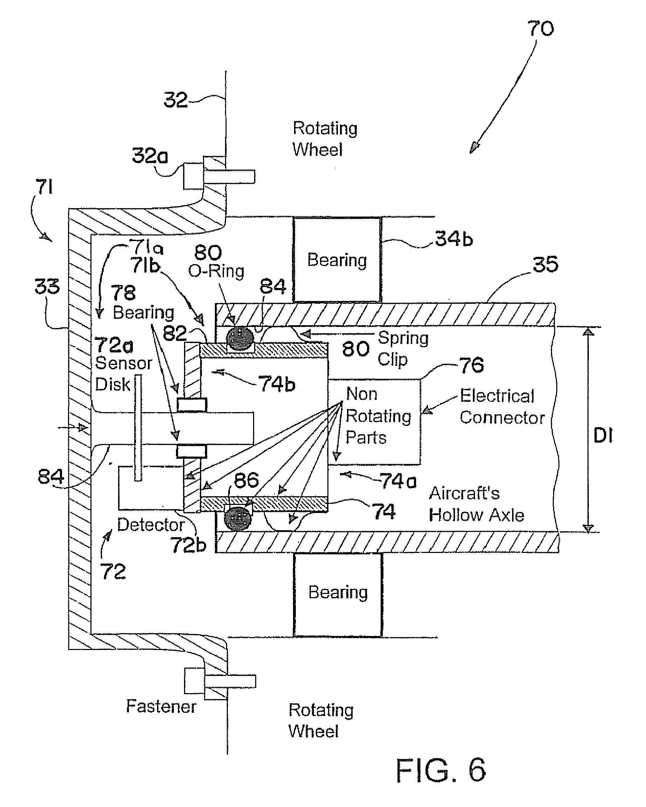

Further, and as described in more detail with respect to Fig. 6, a wheel speed sensor (not shown in Fig. 3) includes a first part coupled to and rotatable with the hubcap 33, and a second part coupled to a support structure, independent of the aircraft axle 35. The first part rotates with the hubcap such that the first part moves about the hubcap centerline in a circular orbit. Additionally, the second part is positionally fixed to the support structure. The wheel speed sensor can be an encoder, an AC or DC tach, a resolver, a Hall effect sensor, or any other device that can be used to measure a change in relative position with respect to time.

Referring to Fig. 5, an exemplary schematic diagram of an aircraft brake control system 60 is shown. The system 60 includes a brake pedal 62 located in the aircraft, wherein the brake pedal 62 generates a signal proportional to an amount of pedal deflection or desired braking force. The signal generated by the brake pedal 62 is provided to a brake controller 64, which also receives data relating to the wheels and brakes 30 (e.g., wheel speed, brake torque, brake temperature, etc.). The brake controller 64 can include a microprocessor 64a, read only memory (ROM) 64b, random access memory (RAM) 64c, and input/output module 64d, each of which are communicatively coupled via a system bus 64e or the like. A braking program can reside in ROM 64b and can be executed by the microprocessor 64a so as to implement a braking function.

The brake controller 64 is operatively coupled to a brake actuator 66, such as one or more hydraulic valves, electric motors, or the like, which in turn drive respective actuator rams 55. Based on a braking command from the pedal 62 and data relating to the wheel and brakes, the braking controller 64 provides a signal to the brake actuator 66 so as to implement the braking command while preventing wheel skid (antiskid control), control the deceleration of the wheel, or other speed related logic functions of brake control.

Referring now to Fig. 6, there is shown a simplified side view of an exemplary wheel assembly 70 for an aircraft, wherein the brake assembly and associated components have been omitted for clarity. The wheel assembly 70 includes a hub cap assembly 71 that interfaces with the aircraft axle 35, as well as the wheel 32 via fasteners 32a. The hub cap assembly 71 comprises both rotating 71 a and non-rotating 71 b portions, as well as a wheel speed sensor 72. The wheel speed sensor 72 includes a first part 72a coupled to the rotating portion 71 a, and a second part 72b coupled to the non-rotating portion 71b of the hub cap assembly 71. The wheel speed sensor 72 will be described in more detail below.

The non-rotating portion 71 b includes an axle interface receiver 74 that fits within the aircraft axle 35. The axle interface receiver 74, for example, may be cylindrical in shape and dimensioned so as to fit within the inner diameter D1 of the aircraft axle 35. Preferably, the axle interface receiver 74 is dimensioned so as to provide a non-interference fit with the aircraft axle 35.

A proximal end 74a of the axle interface receiver 74 includes a connector 76, such as an electrical or optical connector, which is couplable to the brake controller 64. The connector 76 provides a means for supplying signals from the hub cap assembly 71 to the brake controller 64, as described in more detail below, A distal end 74b of the axle interface receiver 74 includes a bearing 78 or the like, which couples the non-rotating portion 71 b of the hub cap assembly with the rotating portion 71a of the hub cap assembly. The second portion 72b of the wheel speed sensor 72, which may be an optical sensor, for example, also is attached to the distal end 74b of the axle interface receiver 74.

The axle interface receiver 74 also includes one or more anti-rotation mechanisms 80, such as a spring clip, o-ring, or the like. The anti-rotation mechanism 80 interfaces with an outer surface 82 of the axle interface receiver 74 and an inner surface 84 of the aircraft axle 35, The anti-rotation mechanism 80 need only provide a force sufficient to inhibit rotation from forces transferred to the non-rotating portion 71b via the bearing 78 (e,g., from bearing drag). As will be appreciated, these transmitted forces typically are small in magnitude, and thus the opposing force created by the anti-rotation mechanism 80 need only overcome these forces.

For example, the deformation of a rubber o-ring between the outer surface 82 of the axle interface receiver 74 and the inner surface 84 of the aircraft axle 35 typically is sufficient to prevent rotation of the axle interface receiver 74. The o-ring may interface with a slot formed in the axle interface receiver (e.g., slot 84) and/or in the aircraft axle 35. Alternatively, an anti-rotation mechanism embodied as a spring clip may interface directly with the inner and outer surface of the aircraft axle 35 and axle interface receiver 74, respectively, or the clip may interface with slots, tabs or the like formed in the axle and/or axle interface receiver 74. As was noted above, the axle interface receiver 74 and components attached thereto are non-rotating parts, i.e., they remain in a relatively fixed position with respect to the aircraft axle 35 without substantial movement during wheel rotation.

The rotating portion 71 a of the hub cap assembly 71 includes the hub cap 33 and hub cap axle 84, wherein the hub cap 33 and hub cap axle 84 rotate about a common centerline (i.e., the hub cap centerline 14). As will be appreciated, the hub cap axle 84 and hub cap 33 may be integrally formed as a one-piece unit, or they may be separate pieces that are fastened to one another. Also included in the rotating portion 71a is the first part 72a of the wheel speed sensor 72, which may be a disk comprising slits formed therein. The first part 72a is coupled to and rotates with the hub cap axle 84 about the hub cap centerline 14.

In the exemplary embodiments illustrated herein, the wheel speed sensor 72 comprises an optical encoder, wherein the first part 72a includes a disk having an effector 88 that comprises a plurality of slits formed in the disk, and the second part 72b includes a detector 90 that comprises one or more optical pickups. One or more leads (not shown) electrically or optically couple the detector 90 to the connector 76, thereby providing data to the brake controller 64. As will be appreciated, the wheel speed sensor 72 may be embodied in other forms without departing from the scope of the invention.

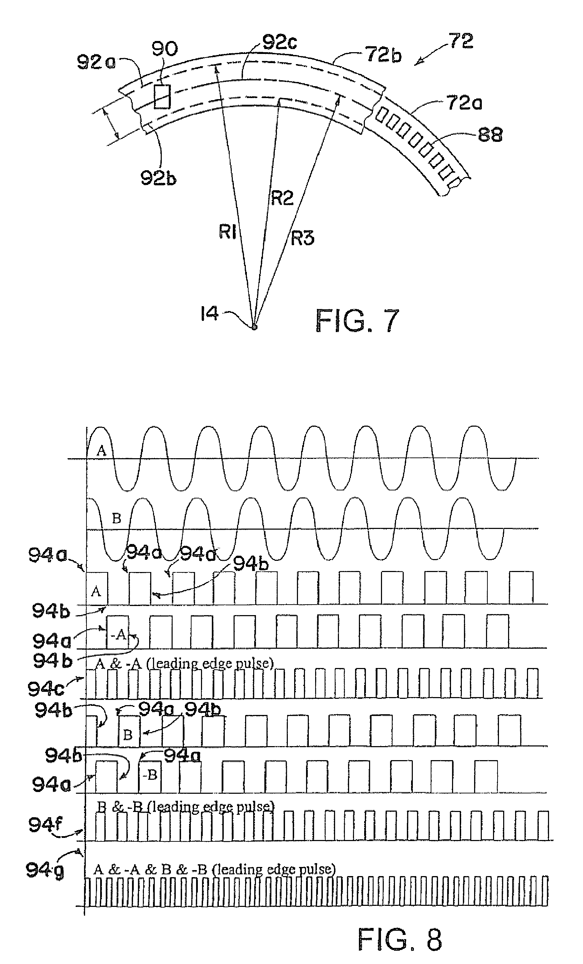

With further reference to Fig. 7, a relative position of an effector 88 with respect to the hubcap 33 and/or the hubcap centerline 14 is fixed (i.e., the hubcap and effector rotate about the common centerline 14, wherein at least a portion of the first part 72a, such as the effector 88, exhibits a circular orbit about the centerline 14). Further, the wheel speed sensor 72 includes a second part 72b having a detector 90, wherein the second part 72b is attached to the distal end 74b of the axle interface receiver 74 such that a relative position of the detector 90 with respect to the hubcap centerline 14 is fixed.

The detector 90 has a detection range such that as the effector 88 passes through the detection range, data relating to wheel speed is obtained. Moreover, the detector 90 is positioned such that the detection range corresponds to a radius of the effector orbit. Preferably, the effector orbit follows a trajectory that is substantially tangential to a predefined trajectory between an upper detection limit and a lower detection limit of the detector 90, wherein the upper detection limit, lower detection limit and predefined trajectory correspond to different orbits around the hubcap centerline 14. For example, the detector 90 of the second part 72b can detect the effector 88 provided the effector 88 passes between an upper detection limit 92a and a lower detection limit 92b. The upper detection limit 92a can correspond to a first orbit having a radius R1 about the centerline 14, and the lower detection limit 92b can correspond to a second orbit having a radius R2 about the centerline 14, wherein R1>R2. Then, the effector 88 can follow or be tangential to an orbit 92c, wherein the orbit 92c has a radius R3 and a center point located at the centerline 14, and wherein R1 >R3>R2.

Alternatively, the speed sensor may be a resolver, and the hub cap axle 84 may be directly or indirectly coupled to an input shaft of the resolver. As is known, a resolver can provide absolute position data within one revolution of the resolver input shaft. Thus, the angular orientation of the hub cap axle 84 (and thus the aircraft wheel) can be determined even at zero speed. Further, axle rotational velocity (and thus wheel velocity) can be determined from the change in angular axle position with respect to time. Other examples of a speed sensor include an AC or DC tach, a hall effect sensor, a quadrature sensor, a pulse tach, or the like.

The wheel speed sensor 72 can be embodied as a sensor that comprises multiple channels, as shown in Fig. 8. When multiple channels are employed, it is preferable that the channels are out of phase from one another by ninety degrees, wherein each channel provides a predetermined number of pulses per revolution. In a two channel system, for example, the rising and falling edges of the respective channels can be used to double the pulses per revolution from the sensor 72. For example, the rising 94a and falling 94b edges of a first channel (A and -A) can be used to derive a new pulse train 94c having double (2x) the pulses per revolution Similarly, the rising 94d and falling 94e edges of a second channel (B and -B) can be used to derive a new pulse train 94f having double the pulses per revolution. Further, the two channels 94c, 94f can be doubled again as described herein to achieve four times (4x) the original channel frequency 94g.

During normal operation, the 4x channel can be used to provide enhanced performance of the brake control. Should a channel fail, the system can operate using the 2x channel provided by the single channel (A or B). This approach enables high resolution speed feedback in a small package, while providing redundancy at a lower resolution.

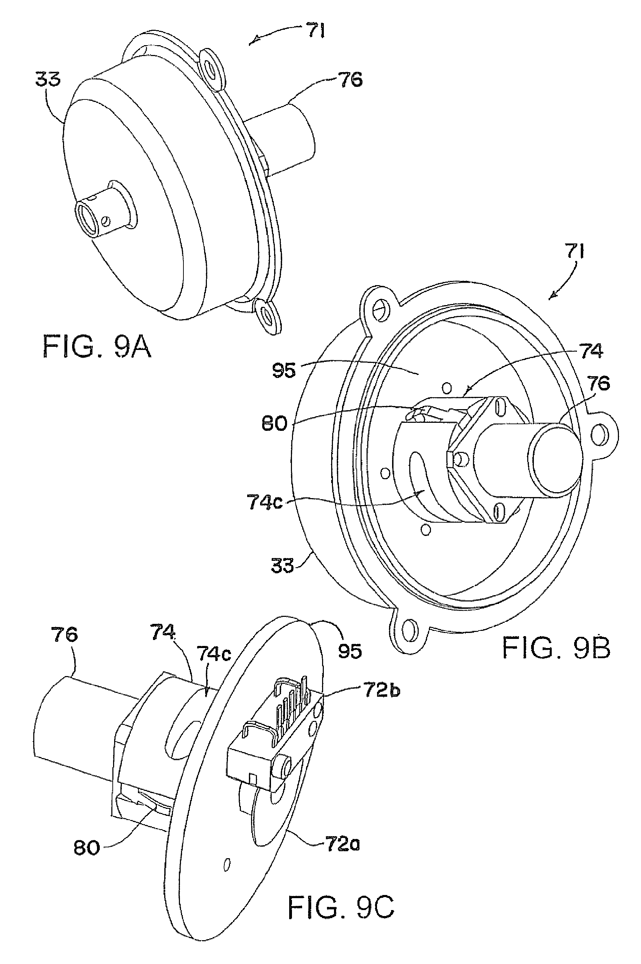

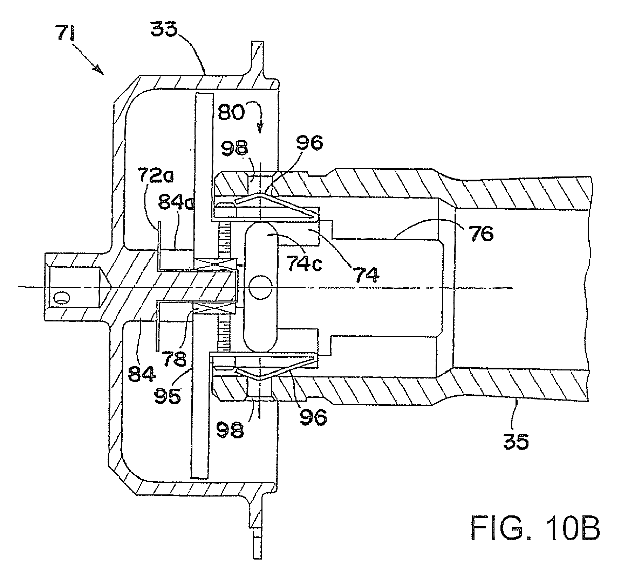

Figs. 9A and 9B are perspective views of the hub cap assembly 71, wherein Fig. 9A illustrates a front portion of the hubcap 33, while Fig. 9B illustrates the axle receiver interface 74 and a rear portion of the hubcap 33. Fig. 9C is a perspective view of axle receiver interface 74 without the hubcap 33. As can be seen in Fig. 9B and 9C, the axle receiver interface 74 includes the aforementioned anti-rotation mechanism 80 that interfaces with the aircraft axle 35 so as to inhibit rotation of the axle interface receiver 74 with respect to the aircraft axle 35. The anti-rotation mechanism will be described in more detail with respect to Figs. 10B. Also shown in Figs. 9B and 9C is wiring slot 74c formed in the axle interface receiver 74. The wiring slot 74c facilitates routing of electrical or optical leads from the sensor 72 to the connector 76 and helps visually in assembling while reducing weight. Also shown in Figs. 9A-9C is a flange 95 formed on the distal end 74b of the axle interface receiver 74. The flange 95 can provide a convenient location for attaching components, such as portions of the speed sensor 72, for example.

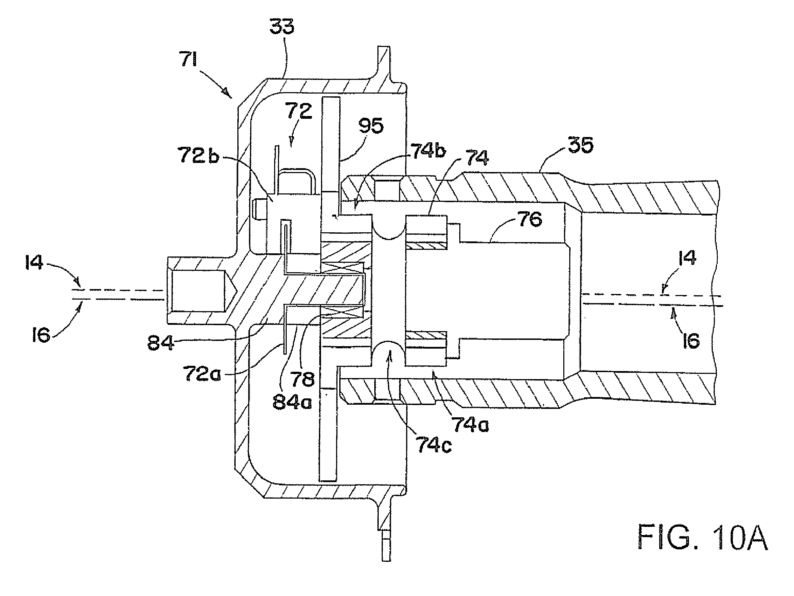

With further reference to Fig. 10A, a cross sectional view of the hub cap assembly 71 is shown coupled to the aircraft axle 35. Due to manufacturing tolerances, a centerline 16 of the aircraft axle 35 may be offset from a centerline 14 of the hubcap 33 (the offset is exaggerated for sake of clarity). However, because the first part 72a and second part 72b of the speed sensor 72 are part of the hub cap assembly 71 as described herein, the hubcap velocity is effectively measured from the point of view of the hubcap centerline 14, and not the aircraft axle 35 or axle centerline 16. Thus, the measured velocity is the true speed of the hubcap 33 (and thus the wheel attached to the hubcap). In the exemplary embodiment of Fig. 10A, the first part 72a is secured to the hub cap axle 84 via a sleeve 84a, which may be pressed on the rotating hub cap axle 84, for example.

Referring now to Fig. 10B, the anti-rotation mechanism 80 is shown in more detail. In the exemplary embodiment of Fig. 10B, the anti-rotation mechanism 80 comprises a spring clip 96 coupled to the axle interface receiver 74, and an interface 98, such as a slot, recess or the like formed in the aircraft axle 35. As the axle interface receiver 74 is inserted into the aircraft axle 35, the spring clip 96 deforms or compresses as the axle interface receiver 74 is initially inserted into the aircraft axle 35, and then expands to engage the interface 98 of the aircraft axle 35, thereby inhibiting rotation of the axle interface receiver 74 with respect to the aircraft axle 35.

The anti-rotation mechanism 80 may be embodied in other forms, and the spring clip retention mechanism is merely exemplary. For example, and as described above, the anti-rotation mechanism 80 can be an O-ring that engages an outer wall of the axle interface receiver and an inner wall of the aircraft axle 35. The anti-rotation mechanism 80 can be any device that will fix the axle interface receiver 74 against rotation relative to the aircraft axle 35.

Accordingly, a wheel speed measuring system has been disclosed that provides a measurement of true wheel speed, without errors associated with orbiting velocities (from misalignment). The system can be used to provide improved braking control and enhanced anti-skid control, thereby improving braking performance. Moreover, since the hubcap and/or hubcap centerline are used as a reference point for speed measurement, the interface between the axle and the wheel assembly need not be precise, thereby reducing machining costs as well as eliminating weight, wear and cost associated with the conventional coupling, for example.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application

## Claims

1. A hub cap assembly (71) couplable to an axle (35) of a vehicle, said assembly operable to obtain data indicative of wheel velocity, comprising:
a housing (74);
a hub cap (33) rotatably coupled to said housing (74);
a speed sensor (72) coupled to said hub cap (33) and said housing (74).

2. The assembly of claim 1, wherein said speed sensor (72) comprises a first part (72a) and a second part (72b), said first part coupled to and rotatable with said hub cap (33), and said second part coupled to said housing (74).

3. The assembly of claim 2, wherein said hub cap (33) comprises a hub cap axle (84).

4. The assembly according to any one of claims 2-3, wherein the first part (72a) comprises a disk with at least one slit (88) formed therein, and the second part (72b) comprises a pick up operatively coupled to the disk.

5. The assembly according to any one of claims 1-4, wherein a rotational centerline (14) of said hub cap (33) and a rotational centerline of said speed sensor (72) substantially coincide with one another.

6. The assembly according to any one of claims 1-5 wherein the housing (74) comprises an anti-rotation mechanism (80), said anti-rotation mechanism inhibiting rotation of said housing (74) relative to said axle (35).

7. The assembly of claim 6, wherein said axle (35) comprises a slot or tab (98), and said anti-rotation mechanism (80) engages the slot or tab to inhibit rotation of said housing (74).

8. The assembly according to any one of claims 6-7, wherein the anti-rotation mechanism (80) is at least one of an O-ring or a clip.

9. The assembly according to any one of claims 6-8, wherein the anti-rotation mechanism (80) exhibits elastic properties.

10. The assembly according to any one of claims 1-9, wherein the speed sensor (72) is at least one of an encoder, a resolver, a hall effect sensor, a pulse tach, an AC tach or a DC tach.

11. The assembly according to any one of claims 1-10, wherein the speed sensor (72) is a quadrature sensor.

12. The assembly according to any one of claims 1-11, further comprising a brake control system (60) operatively coupled to the speed sensor (72).

13. The assembly according to any one of claims 1-12, wherein the rotational centerline (14) of the hubcap (33) is offset from a longitudinal centerline (16) of the axle (35).

14. A method for measuring wheel speed using a hub cap assembly (71) comprising a housing (74), a speed sensor (72) and a hub cap (33), the method comprising
using the sensor (72) to measure a rotational velocity of the hub cap (33) relative to the housing (74).

15. The method of claim 14, further comprising:
coupling a first part (72a) of the speed sensor (72) to the hub cap (33) such that the first part and the hubcap rotate about a substantially common centerline; and
coupling a second part (72b) of the speed sensor (72) to the housing (74).

16. The method according to any one of claims 14-15, further comprising using at least one of an encoder, a resolver, a hall effect sensor, a pulse tach, an AC tach or a DC tach to measure the velocity.

17. The method according to any one of claims 14-16, further comprising using a quadrature sensor to measure the velocity.

18. The method according to any one of claims 14-17, further comprising:
providing the measured speed to a brake controller (64); and
using the brake controller (64) to implement a brake algorithm based on the measured velocity.

19. The method according to any one of claims 14-18, further comprising using a multi-channel sensor as the speed sensor (72), wherein rising and falling edges of each sensor channel (A, B) are used to create at least first and second output signals (94c, 94f) having greater resolution than each sensor channel.

20. The method of claim 19, further comprising using rising and falling edges of the first and second output signals (94c, 94f) to create a third output data signal (94g) having greater resolution than the first and second output signals.

21. The method according to any one of claims 14-20, further comprising:
using a multi-channel sensor as the speed senor (72);
deriving a first output signal (94c) from a first channel (A) of the sensor (72), said first output signal having greater resolution than the first channel;
deriving a second output signal (94f) from a second channel (B) of the sensor (72), said second output signal having greater resolution than the second channel;
deriving a third output signal (94g) from the first and second output signals (94c, 94f), said third output signal having greater resolution than the first and second output signals;
measuring wheel speed based on the third output signal (94g) under normal operation; and
measuring wheel speed based on either the first or second output signal (94c, 94f) when a fault is detected in the other of the first or second output signal.

22. An aircraft wheel speed monitoring system for detecting a speed of an aircraft wheel, comprising:
a hubcap (33) rotatable with the aircraft wheel; and
a sensor (72) operatively coupled to the hubcap (33), wherein the sensor includes at least two channels (A, B) 90 degrees out of phase with respect to each other.

23. The system of claim 22, wherein rising and falling edges of each sensor channel are used to create at least a first output signal (94C) and a second output signal (94f), wherein each output signal has greater resolution than each sensor channel.

24. The system according to any one of claims 22-23, wherein rising and falling edges of the two output signals (94c, 94f) are used to create a third output signal (94g) having greater resolution than the first and second output signals.
